(19) Europäisches Patentamt
European Patent Office
Office européen des brevets

(11) EP 3 650 121 A1

(12) **EUROPEAN PATENT APPLICATION**
published in accordance with Art. 153(4) EPC

(43) Date of publication:
**13.05.2020 Bulletin 2020/20**

(21) Application number: **18855429.9**

(22) Date of filing: **11.09.2018**

(51) Int Cl.:
***B01J 35/02*** *(2006.01)*

(86) International application number:
**PCT/JP2018/033618**

(87) International publication number:
**WO 2019/054367 (21.03.2019 Gazette 2019/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.09.2017 JP 2017177295**

(71) Applicant: **Daikin Industries, Ltd.**
**Osaka-shi, Osaka 530-8323 (JP)**

(72) Inventors:
- **LIU, Jihong**
**Osaka-shi**
**Osaka 530-8323 (JP)**
- **KARUBE, Daisuke**
**Osaka-shi**
**Osaka 530-8323 (JP)**

(74) Representative: **Goddar, Heinz J.**
**Boehmert & Boehmert**
**Anwaltspartnerschaft mbB**
**Pettenkoferstrasse 22**
**80336 München (DE)**

(54) **CATALYST PELLET**

(57) A catalyst pellet has the shape of a column and has a cross-section having the shape of an ellipse (an ellipse in a broad sense encompassing an oblong and an oval) in a direction perpendicular to an axis, wherein the ellipse has a length denoted by 2a and a width denoted by 2b, and a length-width ratio a/b satisfies $1.0 < a/b \leq 2.0$.

FIG.5

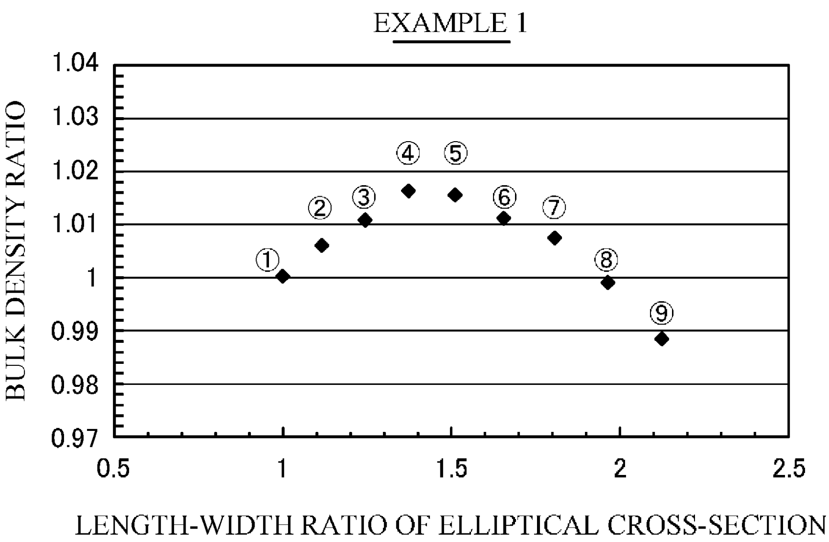


EP 3 650 121 A1

## Description

Technical Field

The present disclosure relates to a catalyst pellet having the shape of a column.

Background Art

Catalyst pellets that are packed into reactors in vapor-phase flow reaction equipment continuously causing vapor-phase chemical reactions, such as refrigerant manufacturing equipment, are often catalyst pellets having the shape of a column. Specifically, such catalyst pellets have the shape of a cylinder, that is, the shape of a column having a circular cross-section (for example, refer to Patent Literature 1).

Patent Literature 2 discloses a technique of packing a catalyst into a reactor.

Citation List

Patent Literature

PTL 1: Japanese Unexamined Patent Application Publication (Translation of PCT Application) No. 2013-545597

PTL 2: Japanese Unexamined Patent Application Publication (Translation of PCT Application) No. 2015-530919

Summary of Invention

Technical Problem

When catalyst pellets are not uniformly packed in a reactor, gas flow may pass a route deviating in the cross-section direction of the catalyst packed bed, so that some of the catalyst pellets are not used for the reaction. In a case where a reactor is excessively packed with catalyst pellets (at high bulk density), undesired phenomena occur, such as lower diffusibility of the reaction gas and generation of differential pressure; this results in, in the reactor, a decrease in the reaction efficiency such as a decrease in the raw material conversion or a target selectivity. Conversely, in a case where a reactor is sparsely packed with catalyst pellets (at low bulk density), the reaction gas does not efficiently contact the catalyst. In summary, both of these cases cause the problem of a decrease in the catalyst reactivity. PTL 1 employs catalyst pellets having the shape of a cylinder; when catalyst pellets are prepared with a specified shape or a specified dimensional ratio to thereby be uniformly packed in a reactor at a predetermined bulk density, occurrence of the above-described problem is suppressed, which is desirable.

On the other hand, in PTL 2, during packing of a catalyst into a reactor, vibrations are applied to the reactor to achieve uniform packing. However, this case requires a mechanism of applying vibrations to the reactor, which complicates the apparatus.

The above-described problem is not limited to catalyst pellets packed into reactors of refrigerant manufacturing apparatuses. The problem may similarly occur in catalyst pellets used for other applications and packed into reactors.

An object of the present disclosure is to define the shape and dimensional ratio of catalyst pellets such that the catalyst pellets can be uniformly packed in a reactor at a predetermined bulk density, to thereby suppress a decrease in the reaction efficiency of the reactor and prevent complication of the apparatus.

Solution to Problem

A first aspect of the present disclosure is a catalyst pellet (10) that has the shape of a column and has a cross-section having the shape of an ellipse in a direction perpendicular to an axis. Incidentally, the "ellipse" in the present disclosure is a general term referring to, in addition to the ellipse strictly defined in mathematics, an oblong (for example, a shape including, between two semicircular portions, straight line segments that oppose each other), an oval, and a non-circular shape that is similar to the foregoing and has a difference between the length and the width.

A second aspect of the present disclosure: in the first aspect, the ellipse has a length denoted by 2a and a width denoted by 2b, and $1.0 < a/b \leq 2.0$. In this formula, $1.0 < a/b$ means a non-circular shape having a difference between the length and the width; substantially the same feature can be represented by another relation such as $1.05 \leq a/b \leq 2.0$.

A third aspect: in the second aspect,

$$1.2 \leq a/b \leq 1.8.$$

A fourth aspect: in the third aspect,

$$1.4 \leq a/b \leq 1.6.$$

A fifth aspect: in any one of the first to fourth aspects, the ellipse has a length denoted by 2a and a width denoted by 2b, and the column has a height denoted by t, and

$$0.8 \leq (2 \times (a \times b)^{0.5})/t \leq 2.0.$$

A sixth aspect: in the fifth aspect,

$$0.9 \leq (2 \times (a \times b)^{0.5})/t \leq 1.6.$$

A seventh aspect: in any one of the first to sixth aspects, the catalyst pellet (10) is formed of a crystalline substance.

In the first to seventh aspects, catalyst pellets (10) are provided to have a cross-section having the shape of an ellipse as defined in this Specification, so that, referring to circled numbers 2 to 8 in Fig. 5 and circled numbers 2 to 7 in Fig. 8 (catalyst pellets (10) having an elliptical cross-section according to the present disclosure), high bulk densities are achieved in the reactors, compared with the catalyst pellets of circled number 1 having a circular cross-section. In particular, the fourth aspect provides a high bulk density ratio (ratio of bulk density of elliptical cross-section pellets to bulk density of circular cross-section pellets). In the fifth and sixth aspects, referring to Fig. 10 and Fig. 11, a range where the bulk density is high can be determined on the basis of the length 2a, width 2b, and height t of the catalyst pellets (10).

Advantageous Effects of Invention

In the present disclosure, the catalyst pellet (10) is provided so as to have a cross-section having the shape of an ellipse as defined above, and to have a dimensional ratio as defined above, so that such catalyst pellets (10) can be uniformly packed into a reactor (20) at a predetermined bulk density. This suppresses the decrease in the reaction efficiency in the reactor (20).

In addition, during packing of the catalyst pellets (10) into the reactor (20), the necessity of applying vibrations to the reactor has been eliminated, which suppresses complication of the apparatus.

Brief Description of Drawings

[Fig. 1] Fig. 1 is a plan view of a catalyst pellet according to an embodiment.

[Fig. 2] Fig. 2 is a front view of the catalyst pellet in Fig. 1.

[Fig. 3] Fig. 3 is a front view of a reactor into which catalyst pellets are packed.

[Fig. 4] Fig. 4 is a graph of mean stress of catalyst pellets in Example 1 and Comparative Example 1.

[Fig. 5] Fig. 5 is a graph of bulk density of catalyst pellets in Example 1 and Comparative Example 1.

[Fig. 6] Fig. 6 is a table describing the length 2a, width 2b, and length-width ratio a/b of catalyst pellets in Example 1 and Comparative Example 1.

[Fig. 7] Fig. 7 is a graph of mean stress of catalyst pellets in Example 2 and Comparative Example 2.

[Fig. 8] Fig. 8 is a graph of bulk density of catalyst pellets in Example 2 and Comparative Example 2.

[Fig. 9] Fig. 9 is a table describing the length 2a, width 2b, and length-width ratio a/b of catalyst pellets in Example 2 and Comparative Example 2.

[Fig. 10] Fig. 10 is a graph in which the diameter-thickness ratio of equivalent-volume pellets is plotted as the abscissa, and the stress ratio of elliptical cross-section catalyst pellets to circular cross-section catalyst pellets while being packed in reactors is plotted as the ordinate.

[Fig. 11] Fig. 11 is a graph in which the diameter-thickness ratio of equivalent-volume pellets is plotted as the abscissa, and the bulk density ratio of elliptical cross-section catalyst pellets to circular cross-section catalyst pellets while being packed in reactors is plotted as the ordinate.

[Fig. 12] Fig. 12 is a graph of time for packing catalyst pellets in Examples and Comparative Example into reactors.

Description of Embodiments

Hereinafter, embodiments will be described in detail with reference to drawings.

This embodiment relates to catalyst pellets packed into a reactor in refrigerant manufacturing equipment. As illustrated in Fig. 1 and Fig. 2, such a catalyst pellet (10) is a pellet that has the shape of a column and has a cross-section having the shape of an ellipse in a direction perpendicular to the axis. The "ellipse" used herein is a general term referring to, in addition to the ellipse strictly defined in mathematics, an oblong (a shape including semicircular portions that oppose each other across straight line segments), an oval, and a non-circular shape that is similar to the foregoing and has a difference between the length and the width. This catalyst pellet (10) is formed of a powder (catalyst particles) of a crystalline substance such as chromium oxide ($Cr_2O_3$), zinc oxide (ZnO), or aluminum oxide ($Al_2O_3$). Fig. 1 and Fig. 2 illustrate the catalyst pellet (10) as an ellipse (oblong) having length 2a and width 2b, and as a column having height t.

As illustrated in Fig. 3, a reactor (20) is a hollow cylindrical container and is formed of, for example, stainless steel (SUS304). The catalyst pellets (10) are introduced in free fall to the reactor (20), to thereby be packed in random orientations in the reactor (20).

Hereinafter, the results of mean stress and bulk density of catalyst pellets (10) will be described with reference to Fig. 4 to Fig. 11, the results being determined in Comparative Examples in which the catalyst pellets (10) have the shape of a circular cylinder, and Examples in which the catalyst pellets (10) have the shape of an elliptical cylinder in which the ratio (length-width ratio) a/b of length 2a to width 2b is varied. The catalyst pellets (10) in Examples have a shape based on the circular cylindrical catalyst pellets in Comparative Examples, but are prepared by changing the cross-section from the circle to an ellipse (oblong) and setting the length 2a and width 2b of the cross-section of the elliptical column so as to give the same volume as the circular cylindrical catalyst pellets (hereafter, referred to as equivalent-volume catalyst pellets (10) as needed). Incidentally, the mean stress is the mean value of stresses of the catalyst pellets (10) packed in the reactor, the stresses being generated by the self-weight of the catalyst pellets (10), and is a value determined from relatively low stresses generated in catalyst pellets (10) in the upper region, medium stresses generated in catalyst pellets (10) in the intermediate region, and relatively high stresses generated in catalyst pellets (10) in the lower region.

Fig. 4 to Fig. 6 relate to Example 1 and Comparative Example 1. Specifically, circular cylindrical catalyst pellets (10) having a ratio 2r:t of a diameter 2r (about 3.5 mm) to a height t satisfying 2r:t = 1:0.95 are defined as Comparative Example 1; catalyst pellets (10) having a shape based on Comparative Example 1 but obtained by changing, with the same thickness t, the shape of the cross-section from the circle to an ellipse (oblong) while maintaining the volume are defined as Example 1 (catalyst pellets (10) denoted by circled numbers 2 to 8). The mean stresses of the catalyst pellets (10) packed in the reactor (20) are illustrated in the graph of Fig. 4. The bulk density ratios of equivalent-volume catalyst pellets to circular cross-section pellets packed in the reactor (20) are illustrated in the graph of Fig. 5. The catalyst pellets (10) denoted by circled numbers 1 to 9 in Fig. 4 and Fig. 5 are described in Fig. 6 in terms of specific values of a ratio of length 2a to width 2b (length-width ratio a/b).

Fig. 7 to Fig. 9 relate to Example 2 and Comparative Example 2. Specifically, cylindrical catalyst pellets having a ratio 2r:t of a diameter 2r (about 3 mm) to a height t satisfying 2r:t = 1:1.5 are defined as Comparative Example 2; catalyst pellets having a shape based on Comparative Example 2 but obtained by changing, with the same thickness t, the shape of the cross-section from the circle to an ellipse (oblong) while maintaining the volume are defined as Example 2 (catalyst pellets (10) denoted by circled numbers 2 to 7). The mean stresses of the catalyst pellets (10) packed in the reactor (20) are illustrated in the graph of Fig. 7. The bulk density ratios of the equivalent-volume catalyst pellets (10) to the circular cross-section pellets packed in the reactor (20) are illustrated in the graph of Fig. 8. The catalyst pellets (10) denoted by circled numbers 1 to 8 in Fig. 7 and Fig. 8 are described in Fig. 9 in terms of specific values of a ratio of length 2a to width 2b (length-width ratio a/b).

Fig. 5 and Fig. 8 have demonstrated the following: compared with cylindrical catalyst pellets denoted by the circled number 1 in Comparative Examples 1 and 2 (catalyst pellets having a length-width ratio of 1), the catalyst pellets (10) having an elliptical (oblong) cross-section, denoted by circled numbers 2 to 8 in Fig. 5 and circled numbers 2 to 7 in Fig. 8 in Examples 1 and 2 (catalyst pellets (10) having a length-width ratio of more than 1) have high bulk densities while being packed in the reactor (20). On the basis of this result, in this embodiment, the catalyst pellets (10) are prepared so as to have a cross-section having the shape of the above-defined ellipse in a direction perpendicular to the axis.

In both of Examples 1 and 2, when the length-width ratio a/b satisfies $1.0 < a/b \leq 2.0$, the bulk densities are almost certainly higher than those of the circular cross-section catalyst pellets. In particular, when a/b = 1.5, the bulk density substantially reaches the maximum value. Thus, this length-width ratio (a/b = 1.5) is the optimum value of catalyst pellets (10) having an elliptical cross-section. Practically, when $1.4 \leq a/b \leq 1.6$, the bulk density substantially becomes maximal. Even when the length-width ratio a/b is set to $1.2 \leq a/b \leq 1.8$, the resultant bulk density values are higher and better than those of the circular cross-section pellets.

Referring to Fig. 4 and Fig. 7, in both of Examples 1 and 2, when $1.0 < a/b \leq 1.6$, the catalyst pellets (10) undergo mean stresses substantially equal to or lower than in the circular cross-section catalyst pellets; when a/b is more than 1.6, the mean stresses are higher than in the circular cross-section catalyst pellets. Thus, in consideration of the mean stress to the catalyst pellets (10) packed in the reactor (20), the catalyst pellets (10) preferably have a length-width ratio a/b satisfying $1.0 < a/b \leq 1.6$.

Fig. 10 is a graph in which the diameter-thickness ratio of the circular cross-section catalyst pellets (and the equivalent-volume catalyst pellets (10) that exhibit substantially the same tendency as in the circular cross-section catalyst pellets) is plotted as the abscissa, and the stress ratio of the equivalent-volume catalyst pellets (10) to the circular cross-section catalyst pellets packed in the reactor (20) is plotted as the ordinate. Fig. 11 is a graph in which the diameter-thickness ratio of the equivalent-volume pellets (10) is plotted as the abscissa, and the bulk density ratio of the equivalent-volume catalyst pellets (10) to the circular cross-section catalyst pellets packed in the reactor (20) is plotted as the ordinate. These graphs have demonstrated the following. When the relation among the length 2a, width 2b, and height t of the catalyst pellets (10) is

$$0.8 \leq (2 \times (a \times b)^{0.5})/t \leq 2.0,$$

conditions are satisfied that provide lower mean stress and higher bulk density. In particular, when the relation is

$$0.9 \leq (2 \times (a \times b)^{0.5})/t \leq 1.6,$$

the conditions are more effectively satisfied that provide lower mean stress and higher bulk density.

When the mean stress is lowered, catalyst pellets (10) having low strength can be packed in the reactor (20) without disintegration and used for reactions, which is advantageous. In particular, this is suitable for catalyst pellets (10) formed of crystalline powders having relatively low strength.

Fig. 12 is a graph of the time for packing the catalyst pellets (10) into the reactor (20), the time being determined for catalyst pellets (10) having a plurality of length-width ratios. This graph has demonstrated that, when the length-width ratio a/b is $1.05 \leq a/b \leq 2.0$, the time for packing shortens. In summary, use of elliptical catalyst pellets (10) according to this embodiment enhances the mobility of the catalyst pellets (10) during packing.

Advantageous effects of embodiment

In this embodiment, the catalyst pellets (10) are provided so as to have a cross-section having the shape of an ellipse as defined above, and the length-width ratio (a/b) and the relation among length 2a, width 2b, and height t are defined as described above; this enables uniform packing of the catalyst pellets (10) in the reactor (20) at a predetermined bulk density. Thus, this embodiment enables suppression of the decrease in the reaction efficiency in the reactor (20).

In addition, this embodiment provides, during packing of the catalyst into the reactor (20), a high bulk density without application of vibrations to the reactor (20). This eliminates the necessity of the mechanism of applying vibrations to the reactor (20), resulting in suppression of complication of the apparatus. Furthermore, this embodiment also suppresses disintegration (described later) of the catalyst pellets (10) due to the vibrations.

In the above-described embodiment, the catalyst pellets (10) are provided so as to have a cross-section having the shape of an ellipse to achieve a high bulk density. This lowers the stress generated in each of the catalyst pellets (10) packed in the reactor (20), which suppresses insufficiency of the strength of the catalyst pellets (10).

On the other hand, some existing catalyst pellets have low strength. When such pellets are packed into the reactor (20), they are subjected to stress applied by the surrounding pellets, and may be destroyed and disintegrated. Such disintegration of the pellets lowers the diffusibility of the reaction gas, and may result in blocking of the flow of the reaction gas (occurrence of clogging). Thus, disintegration of a large number of pellets requires extra procedures: the reaction is terminated, the catalyst pellets including disintegrated pellets are taken out from the reactor (20), and catalyst pellets from which the disintegrated pellets have been removed are again packed.

By contrast, in the above-described embodiment, the catalyst pellets (10) are provided so as to have a cross-section having the shape of an ellipse, so that the stress is lowered and disintegration becomes less likely to occur, which also suppresses lowering of the diffusibility of the reaction gas. In particular, for catalyst pellets (10) formed of a crystalline substance such as chromium oxide ($Cr_2O_3$), zinc oxide (ZnO), or aluminum oxide ($Al_2O_3$) and having relatively low strength, insufficiency of the strength is effectively suppressed.

In the case where a large number of pellets are disintegrated and catalyst pellets are packed in the reactor (20) again, the reaction product cannot be manufactured with the reactor (20) during the re-packing process, which lowers the productivity. By contrast, the above-described embodiment also suppresses the lowering of the productivity due to re-packing.

Other embodiments

The above-described embodiment may be modified as follows.

For example, in the above-described embodiment, the length 2a, width 2b, and height t are specified. Alternatively, catalyst pellets (10) according to the present disclosure may be provided such that the length-width ratio a/b alone satisfies the range of the above-described embodiment. The catalyst pellets (10), which are not limited to those that satisfy the above-described numerical ranges, at least have a cross-section having the shape of the above-defined ellipse in a direction perpendicular to the axis. Even in this case, compared with the circular cross-section catalyst pellets (10), a high bulk density is achieved during packing into the reactor (20), which suppresses lowering of the reactivity, compared with the circular catalyst pellets.

The present disclosure is not limited to catalyst pellets (10) used in refrigerant manufacturing equipment, and is also applicable to catalyst pellets in other applications.

The embodiment has been described above in terms of catalyst pellets including a powder (catalyst particles) of a crystalline substance such as chromium oxide ($Cr_2O_3$), zinc oxide (ZnO), or aluminum oxide ($Al_2O_3$). However, the present disclosure is also applicable to catalyst pellets in other forms such as columnar catalyst pellets including catalyst layers (layered catalyst).

Incidentally, the above-described embodiments are intrinsically preferred examples, and are not intended to limit the present disclosure, articles to which the present disclosure is applied, or the scope of applications of the present disclosure.

Industrial Applicability

As has been described so far, the present disclosure is advantageous for catalyst pellets having the shape of a column.

Reference Signs List

| | |
|---|---|
| 10 | catalyst pellet |
| 2a | length |
| 2b | width |
| t | height |

**Claims**

1. A catalyst pellet having a shape of a column, and having a cross-section having a shape of an ellipse in a direction perpendicular to an axis.

2. The catalyst pellet according to claim 1, wherein the ellipse has a length denoted by 2a and a width denoted by 2b, and

$$1.0 < a/b \leq 2.0.$$

3. The catalyst pellet according to claim 2, wherein

$$1.2 \leq a/b \leq 1.8.$$

4. The catalyst pellet according to claim 3, wherein

$$1.4 \leq a/b \leq 1.6.$$

5. The catalyst pellet according to any one of claims 1 to 4, wherein the ellipse has a length denoted by 2a and a width denoted by 2b, the column has a height denoted by t, and

$$0.8 \leq (2 \times (a \times b)^{0.5})/t \leq 2.0.$$

6. The catalyst pellet according to claim 5, wherein

$$0.9 \leq (2 \times (a \times b)^{0.5})/t \leq 1.6.$$

7. The catalyst pellet according to any one of claims 1 to 6, being formed of a crystalline substance.

FIG.1

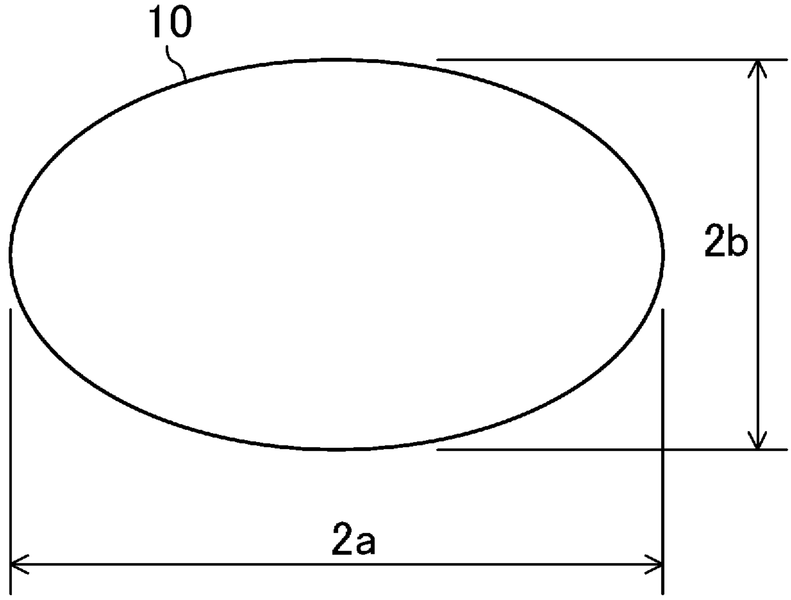


FIG.2

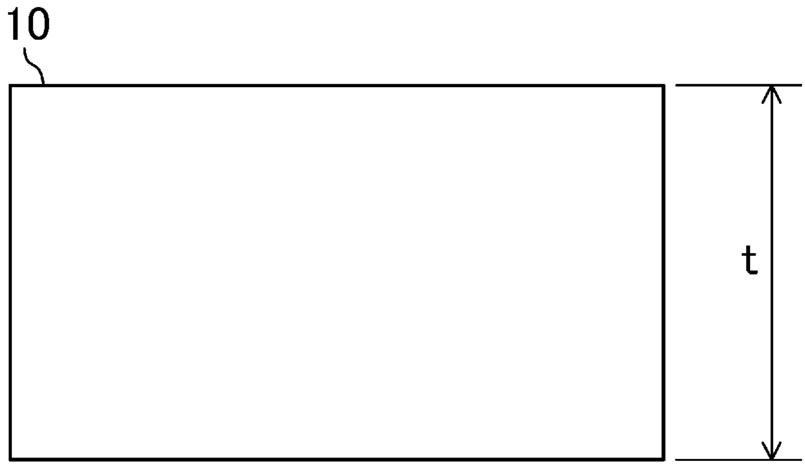

FIG.3

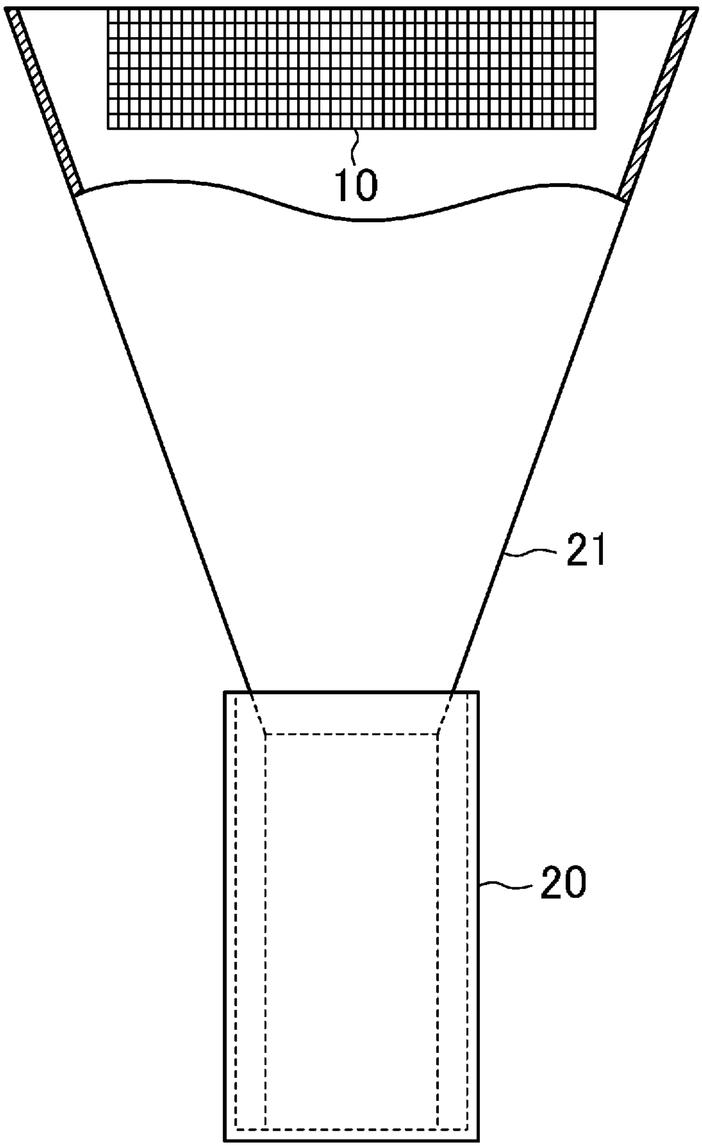

FIG.4

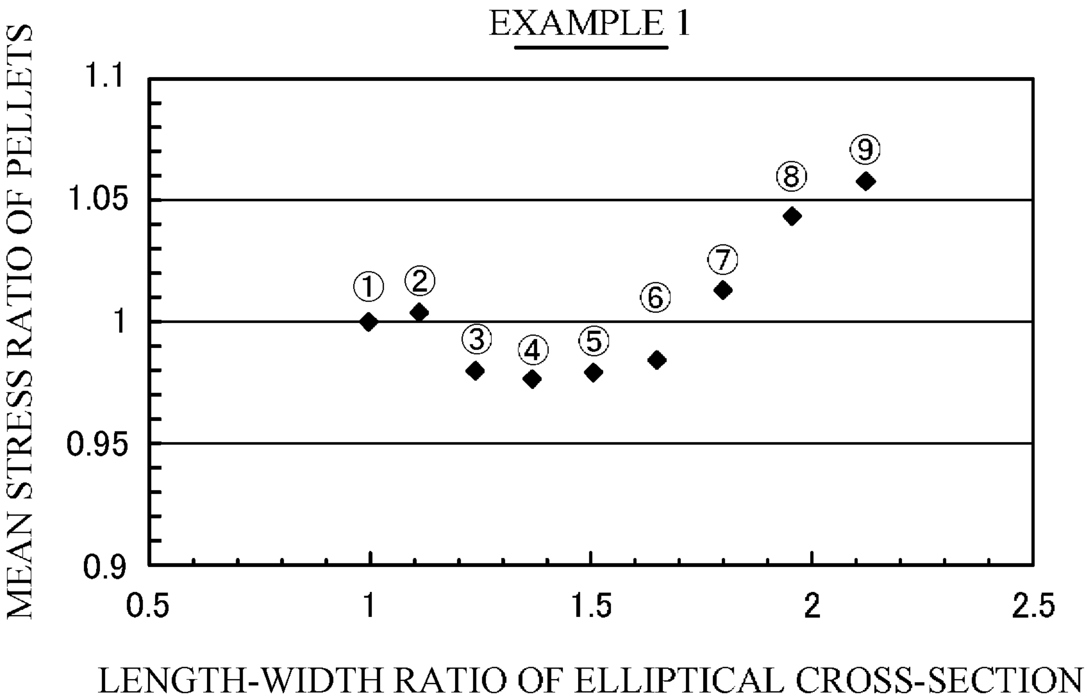
EXAMPLE 1
MEAN STRESS RATIO OF PELLETS
1.1
1.05
1
0.95
0.9
0.5
1
1.5
2
2.5
①
②
③
④
⑤
⑥
⑦
⑧
⑨
LENGTH-WIDTH RATIO OF ELLIPTICAL CROSS-SECTION

FIG.5

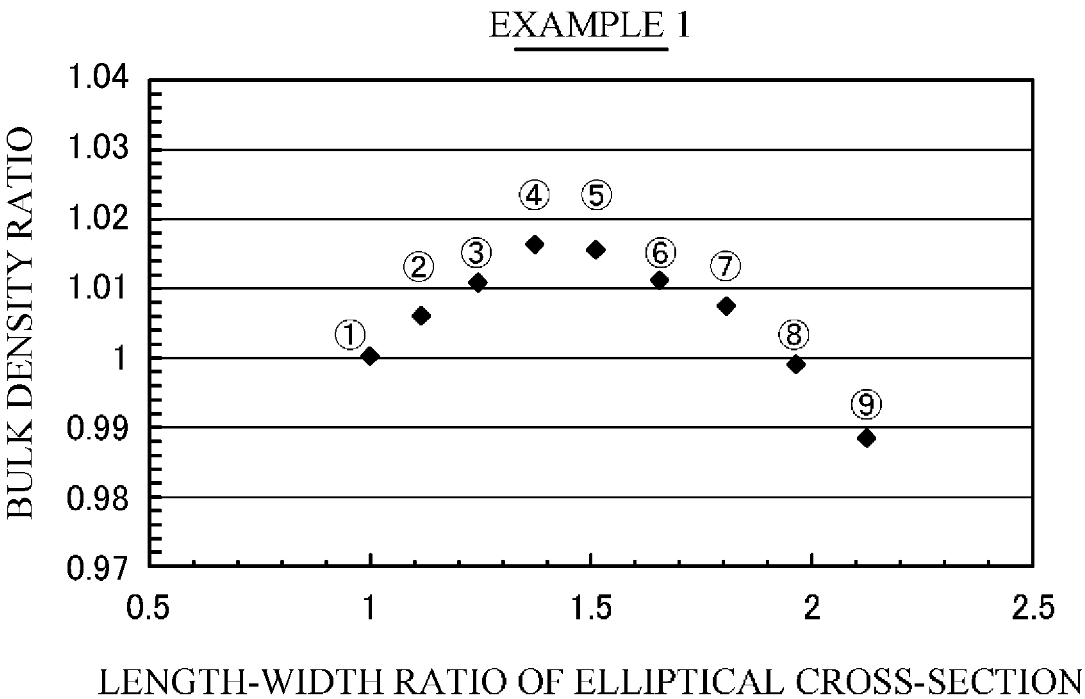
EXAMPLE 1
BULK DENSITY RATIO
1.04
1.03
1.02
1.01
1
0.99
0.98
0.97
0.5
1
1.5
2
2.5
①
②
③
④
⑤
⑥
⑦
⑧
⑨
LENGTH-WIDTH RATIO OF ELLIPTICAL CROSS-SECTION

FIG.6

DIMENSIONS AND LENGTH-WIDTH RATIO
OF PELLETS IN EXAMPLE 1 AND COMPARATIVE EXAMPLE 1

| | ① | ② | ③ | ④ | ⑤ | ⑥ | ⑦ | ⑧ | ⑨ |
|---|---|---|---|---|---|---|---|---|---|
| a/b | 1 | 1.12 | 1.24 | 1.37 | 1.51 | 1.65 | 1.80 | 1.96 | 2.12 |

FIG.7

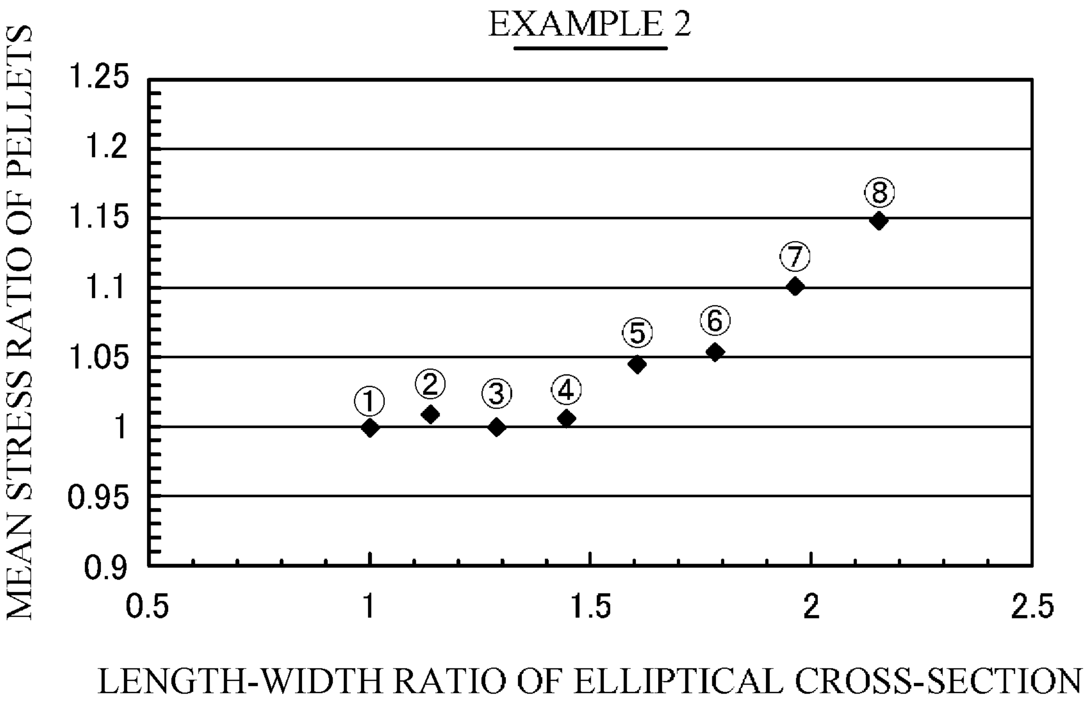
EXAMPLE 2
MEAN STRESS RATIO OF PELLETS
1.25
1.2
1.15
1.1
1.05
1
0.95
0.9
0.5
1
1.5
2
2.5
①
②
③
④
⑤
⑥
⑦
⑧
LENGTH-WIDTH RATIO OF ELLIPTICAL CROSS-SECTION

FIG.8

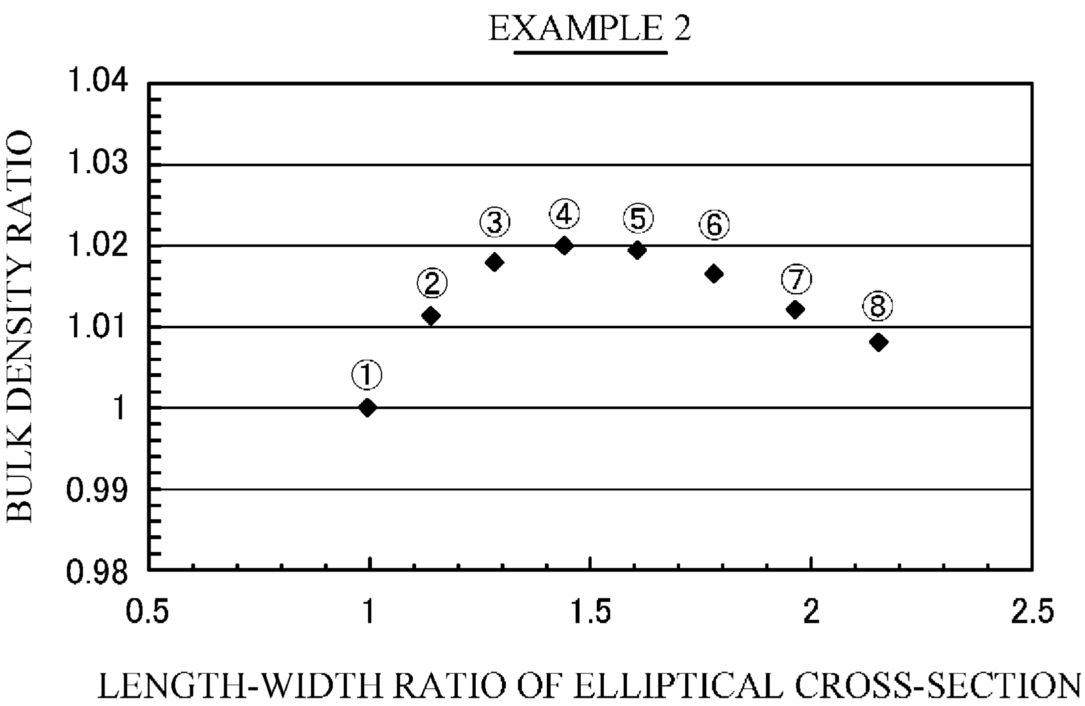
EXAMPLE 2
BULK DENSITY RATIO
1.04
1.03
1.02
1.01
1
0.99
0.98
0.5
1
1.5
2
2.5
①
②
③
④
⑤
⑥
⑦
⑧
LENGTH-WIDTH RATIO OF ELLIPTICAL CROSS-SECTION

FIG.9

DIMENSIONS AND LENGTH-WIDTH RATIO
OF PELLETS IN EXAMPLE 2 AND COMPARATIVE EXAMPLE 2

| | ① | ② | ③ | ④ | ⑤ | ⑥ | ⑦ | ⑧ |
|---|---|---|---|---|---|---|---|---|
| a/b | 1 | 1.14 | 1.28 | 1.44 | 1.60 | 1.78 | 1.96 | 2.15 |

FIG.10

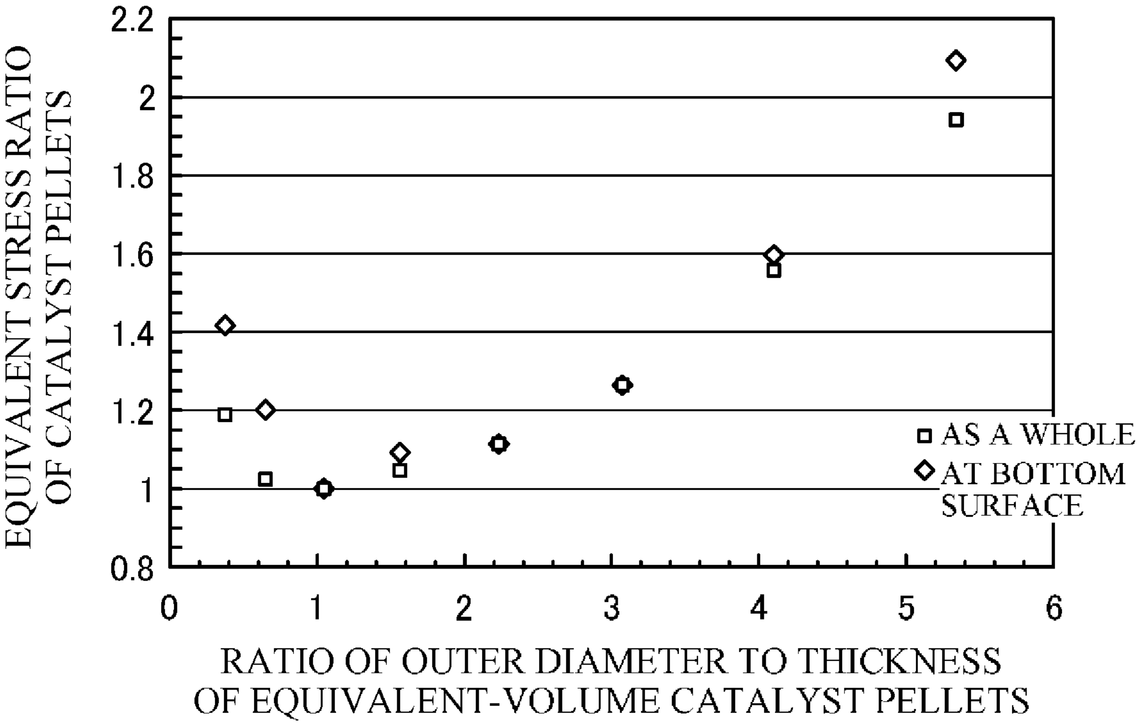

FIG.11

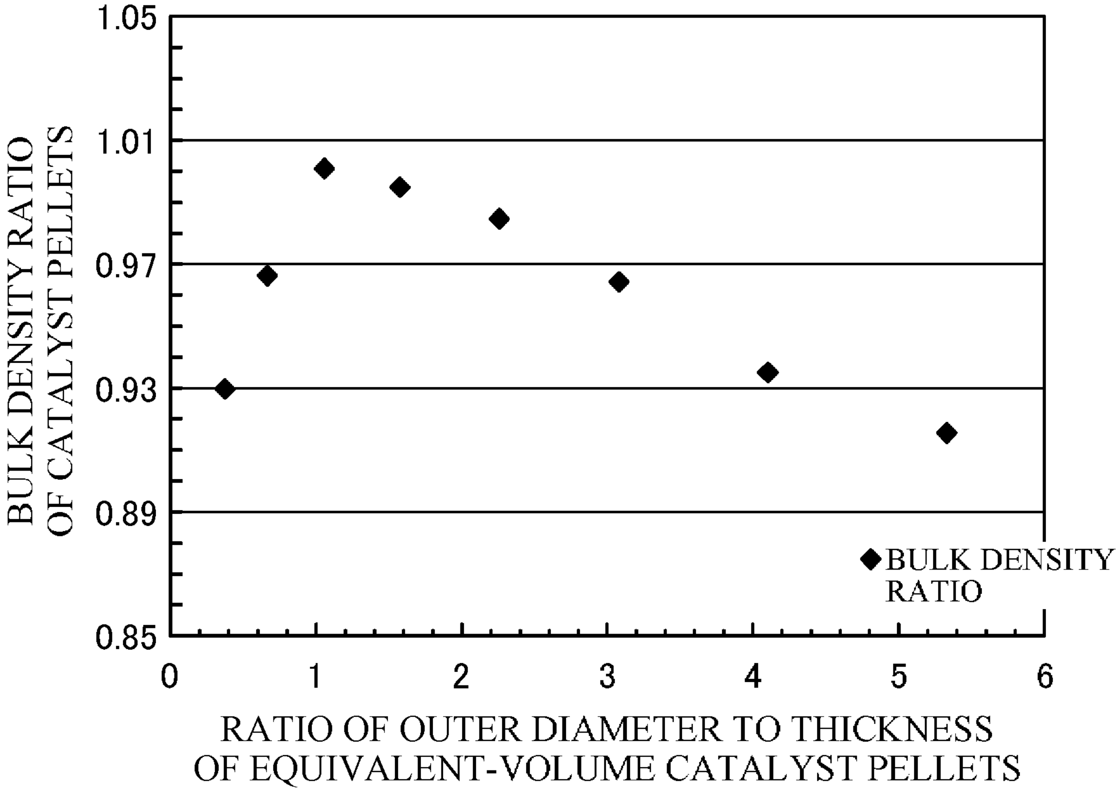
BULK DENSITY RATIO OF CATALYST PELLETS
1.05
1.01
0.97
0.93
0.89
0.85
0
1
2
3
4
5
6
◆BULK DENSITY RATIO
RATIO OF OUTER DIAMETER TO THICKNESS OF EQUIVALENT-VOLUME CATALYST PELLETS

FIG.12

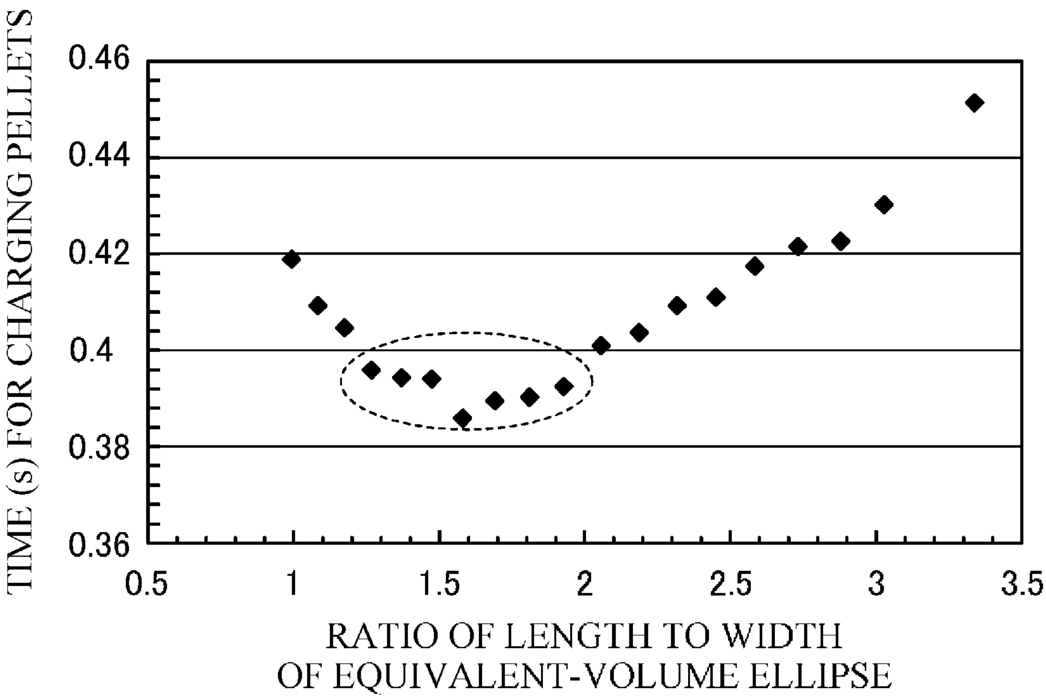
TIME (s) FOR CHARGING PELLETS
0.46
0.44
0.42
0.4
0.38
0.36
0.5
1
1.5
2
2.5
3
3.5
RATIO OF LENGTH TO WIDTH OF EQUIVALENT-VOLUME ELLIPSE

## INTERNATIONAL SEARCH REPORT

International application No.
PCT/JP2018/033618

A. CLASSIFICATION OF SUBJECT MATTER
Int. Cl. B01J35/02(2006.01)i

According to International Patent Classification (IPC) or to both national classification and IPC

B. FIELDS SEARCHED

Minimum documentation searched (classification system followed by classification symbols)
Int. Cl. B01J35/02

Documentation searched other than minimum documentation to the extent that such documents are included in the fields searched
Published examined utility model applications of Japan 1922-1996
Published unexamined utility model applications of Japan 1971-2018
Registered utility model specifications of Japan 1996-2018
Published registered utility model applications of Japan 1994-2018

Electronic data base consulted during the international search (name of data base and, where practicable, search terms used)
JSTPlus/JMEDPlus/JST7580 (JDreamIII)

C. DOCUMENTS CONSIDERED TO BE RELEVANT

| Category* | Citation of document, with indication, where appropriate, of the relevant passages | Relevant to claim No. |
|---|---|---|
| X | JP 57-195188 A (CHEVRON RES) 30 November 1982, description, page 4, upper right column, line 9 to page 5, lower left column, line 2, fig. 1 & US 4606815 A1, description, column 2, line 65 to column 4, line 39, fig. 1 | 1-7 |
| X<br>A | US 2016/0158735 A1 (CLARIANT CORPORATION) 09 June 2016, paragraphs [0032], [0039], fig. 1, 2 & CN 105665030 A | 1<br>2-7 |
| X<br>A | JP 2015-058391 A (NIPPON KAYAKU CO., LTD.) 30 March 2015, paragraphs [0019], [0031], [0037], fig. 5 (Family: none) | 1<br>2-7 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
23.10.2018

Date of mailing of the international search report
06.11.2018

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013545597 W
- JP 2015530919 W